# EUROPÄISCHE PATENTSCHRIFT

(11) **EP 1 131 752 B1**
(45) Veröffentlichungstag und Bekanntmachung des Hinweises auf die Patenterteilung: **02.01.2003**
(21) Anmeldenummer: 99948908.1
(22) Anmeldetag: 30.09.1999
(51) Int. Cl.: G06F 17/60, G06F 17/30

(54) **VERFAHREN ZUR DATENBANKGESTÜTZTEN SELEKTION VON PRODUKTEN FÜR ELECTRONIC-COMMERCE-ANWENDUNGEN IM INTERNET**
METHOD FOR DATABANK-ASSISTED SELECTION OF PRODUCTS FOR ELECTRONIC COMMERCE APPLICATIONS IN INTERNET
PROCEDE POUR LA SELECTION DE PRODUITS, ASSISTEE PAR UNE BANQUE DE DONNEES, POUR DES APPLICATIONS DE COMMERCE ELECTRONIQUE DANS INTERNET

(30) Priorität: 19.10.1998 DE 19849354
(43) Veröffentlichungstag der Anmeldung: 12.09.2001
(73) Patentinhaber: Deutsche Telekom AG, 53113 Bonn (DE)
(72) Erfinder: BÖHM, Andreas, D-64287 Darmstadt (DE); OBERNDORFER, Wolfgang, D-64291 Darmstadt (DE); RAHMER, Jörg, D-64347 Griesheim (DE); UELLNER, Stefan, D-64291 Darmstadt (DE); HAFFNER, Markus, D-69488 Birkenau (DE)
(86) Internationale Anmeldenummer: EP9907246
(87) Internationale Veröffentlichungsnummer: WO00023923

(56) Entgegenhaltungen:
- EP-A- 0 807 891
- EP-A- 0 855 687
- WO-A-98/57277
- US-A- 5 737 592
- "INTERNET ACCESS TO DATABASES WITH USER-DEFINED FIELDS" IBM TECHNICAL DISCLOSURE BULLETIN,US,IBM CORP. NEW YORK, Bd. 40, Nr. 10, 1. Oktober 1997 (1997-10-01), Seiten 133-134, XP000739452 ISSN: 0018-8689

## Beschreibung

Ein relativ neuer Weg, um Produkte anzubieten und zu verkaufen ist der Weg über das Medium Internet über Electronic-Commerce-Anwendungen.
E-Commerce bezeichnet die Ausnutzung der technischen Mittel elektronischer Datennetze, um die Wirtschafts- und Absatzprozesse einer Unternehmung zu fördern und neue Absatzwege zu erschließen. Die Einzelziele erstrecken sich dabei von der Unternehmenskommunikation über die Wertschöpfungsprozesse bis zum Verkaufsvorgang über alle Marktphasen. Für E-Commerce-Anwendungen gibt es folgende Anwendungsgebiete:
- Online Shopping z. B. Werbung, Produktinformation, Interaktion Kunde/Verkäufer,
- Kundendienst z. B. technische Dokumentation, Installation- und Bedienungsanweisung und
- Electronic Data Interchange (EDI). D. h. Standardisierter Datenaustausch zwischen Unternehmen (u. a. Preiskataloge, Bestellungen, Rechnungen).

Entsprechend Krause, J "Electronic Commerce Geschäftsfelder der Zukunft heute nutzen"; Hanser-Verlag 1998 ISB 3-446-19378-2,
erwartet der potentielle Kunde, der über einen Internetzugang verfügt und eine E-Commerce-Anwendung nutzen will, folgendes:
- Ein vollständiges Angebot, keine Fragmente,
- Umfassende Produktinformationen,
- Klare Aussagen zu Preis, Garantiebedingungen, Lieferbedingungen und Service und
- Bestätigung der Bestellung per E-Mail und bei längerer Lieferdauer eine entsprechende Nachricht.

Nachfolgend wird als bekannte Lösung das E-Commerce-System der Deutschen Telekom AG (DTAG) näher beschrieben, welches den E-Commerce-Systemen vieler anderer Unternehmen ähnelt.

Grundlage des unter www.T- Versand.de über Internet bereitgestellten E-Commerce-Systems der DTAG ist die Standardsoftware Intershop. Intershop ist ein voll ausgestattetes Medium, das einen reibungslosen Eintritt in den Online-Markt ermöglicht. Die Intershop-Technologie geht über die typischen Grenzen der HTML-Seiten hinaus und eröffnet ein eigenes Shopping-Center. Intershop ist die weltweit erste standardisierte Software, die es ermöglicht, interaktive, multimediale Online-Shops zu gestalten. Intershop läßt sich auf einfache Weise mit vorhandenen Warenwirtschafts- oder Abrechnungssystemen verknüpfen, als autonomes System betreiben oder beides.
Die Intershop-Softwareprogramme werden an den WWW-Server angebunden, welcher die HTLM-Seiten anbietet. Intershop hat eine Datenbank integriert, welche die Produktkatalogdaten bereithält. Auf der Serverseite wird E-Commerce meist von drei Komponenten bereitgestellt.
- WWW-Server
- E-Commerce-Anwendungen
- Datenbank mit Produktkatalog

Für den Kunden gibt es folgende Möglichkeiten auf die Homepage des T-Versand der DTAG zu kommen:
- Direkteingabe der Adresse "www.T-Versand.de" im Browser,
- über die Internetseiten der DTAG und
- über Internetkataloge.

Hat der potentielle Kunde einen Internetzugang, ganz gleich welcher Technik, kann er den gewünschten Shop öffnen.
Praktisch gesehen betritt er ein kleines Kaufhaus, sucht auf der Startseite die gewünschte Abteilung und erreicht dort mit wenigen Mausklicken die Angebote. Der Online-Shop beginnt mit der Auswahl der Warengruppen. Daneben kann der Kunde noch die allgemeinen Geschäftsbedingungen lesen, ein Lexikon benutzen oder direkt auf Sonderangebote eingehen. Der Kunde kann sich außerdem anmelden, d. h. er kann sich schon dem System bekannt machen, um den späteren Transaktionsprozeß zu starten. Hat der Kunde z. B. die Gruppe "T-Net & analoge Endgeräte" ausgewählt, so kommt er zu einer weiteren Auswahl, in der er zwischen verschiedenen Ausrichtungen dieser Gruppe wählen kann. Der Kunde bekommt zu dieser Auswahl schon nähere Erklärungen darüber, was in dieser Kategorie angeboten wird. Das heißt, er erkennt, ob er auf dem richtigen Weg zu seinem gewünschten Produkt ist.
In der linken Menüleiste hat er jederzeit die Möglichkeit, in eine andere Kategorie zu wechseln.
Hat der Kunde den Link "Schnurgebundene Telefone" gewählt, so erhält er als nächstes die Liste der schnurgebundenen Endgeräte als Ergebnis. Der Kunde kommt somit schon nach seiner dritten Auswahl auf eine Produktauswahlliste. Dies ist ein wichtiger Grundsatz, den E-Commerce-Shops immer einhalten sollten. In der Produktauswahlliste ist jetzt auch ein Bild, der Name, der Preis und eine kurze Beschreibung des ausgewählten Telefons zu sehen. Hat der Kunde ein Telefon ausgewählt, kann er sich das Produktdatenblatt anzeigen lassen, welches die wichtigsten Merkmale aufzeigt. Hier kann sich der Kunde die Merkmale ansehen und sich für das Produkt entscheiden. Im Anschluß daran hat der Kunde folgende Möglichkeiten:
- Das Telefon in den Warenkorb legen,
- zurück auf die Produktliste gehen
- oder Querverweisen folgen (z. B. Zubehör)

Für den Fall, daß sich der Kunde entschlossen hat, ein Telefon in den Warenkorb zu legen, erfüllt der Warenkorb die Funktion die Produkte aufzubewahren, bis der Kunde sich endgültig entschieden hat seine Bestellung aufzugeben. Der Warenkorb bietet folgende Funktionalitäten:
- Produkt einfügen (mit Anzahl),
- Produkt aus Warenkorb löschen,
- Bestellwert anzeigen,
- Lieferbedingungen anzeigen und
- Produkte des Warenkorbes bestellen.

In den meisten Fällen will der Kunde entweder ein Produkt kaufen, sich über Produkte informieren und danach kaufen oder sich nur über Produkte informieren. Ein Kunde, der ein Produkt kaufen will und bereits sein Ziel und meist auch schon das gewünschte Produkt kennt, welches er auswählen will, kann problemlos über das oben beschriebene System einkaufen. Die unschlüssigen bzw. die informationssuchenden Kunden haben es dagegen schon schwerer. Sie müssen sehr oft die Seiten wechseln, um sich über die Unterschiede der angebotenen Produkte zu informieren. Das liegt darin begründet, daß Produkte nur über die Werte des Produktdatenblattes direkt miteinander verglichen werden können. Das derzeit aktuelle System bietet zwar die Präsentation des Kataloges der DTAG im Internet mit vollständiger Verkaufsabwicklung an, aber dennoch gibt es für den Kunden nicht genügend Unterstützung bei der Suche nach dem für ihn geeigneten Produkt. Das liegt insbesondere auch darin begründet, daß die Produktlisten aufgrund ihrer Länge für eine Suche nur bedingt geeignet sind. Ähnliche Produkte, die nur anhand eines kurzen Textes und eines einzelnen Bildes beschrieben wurden, sind oft nicht richtig zu unterscheiden. Um Merkmale der Produkte miteinander zu vergleichen, muß der Kunde sich immer das jeweilige Produktdatenblatt anzeigen lassen und sich die wichtigsten Merkmale merken bzw. notieren. Erst danach kann er wieder zur Produktliste zurückkehren und sich ein anderes Produkt bzw.
Produktdatenblatt anzeigen lassen, um dessen Produktdaten mit den Produktdaten des ersten Produktes zu vergleichen. Diese Vorgehensweise stellt sehr hohe Ansprüche an den Kunden und ist sehr zeitaufwendig. Gerade bei hohen Online-Kosten wird sich der Kunde überlegen, ob dieser Aufwand gerechtfertigt ist, da der gedruckte Katalog den gleichen Informationsgehalt liefert. Noch schwieriger ist der Vergleich von Produkten, die verschiedenen Kategorien zugeordnet sind. Hier ist die Vorgehensweise ähnlich wie oben, nur muß hier noch zusätzlich zwischen den Kategorien gewechselt werden. Ein Beispiel hierfür ist der Vergleich von D-Netz-Telefonen mit C-Netz-Telefonen. Falls ein Kunde nicht über ein gewisses Grundwissen verfügt, bzw. sich vorab noch keine Informationen über bestimmte Produkte angeeignet hat, wird er von den Produktinformationen im Produktdatenblatt überfordert.
Insbesondere sieht er die wichtigsten Merkmale der Produkte auch nicht auf einem Blick. Ein weiterer Mangel wird darin gesehen, daß dem Kunden im System nur wenige Hilfestellungen zur Lösung seines Problems angeboten werden.
Ausgehend von diesem Stand der Technik liegt der Erfindung die Aufgabe zugrunde ein Verfahren zur kundenindividuellen Auswahl von Produkten aus einem Produktkatalog über Internet zu entwickeln, bei dem das vollständige Angebot (Produktliste) und die umfassenden Produktinformationen erhalten bleiben, und bei dem die o.g. Mängel beseitigt werden. Die Erfindung soll dem Kunden eine bessere und schnellere Vergleichsmöglichkeit für den Produktvergleich bieten.
Diese Aufgabe wird durch ein Verfahren gemäß Anspruch 1 gelöst.

Im Stand der Technik sind die Dokumenten EP-855 687 (AT&T CORP.) und "INTERNET ACCESS TO DATABSES WITH USER-DEFINED FIELDS", IBM TECHNICAL DISCLOSURE BULLETIN, US, IBM CORP. NEW YORK, Bd. 40, Nr. 10, 1 Oktober, 1997, Seiten 133-134" bekannt. Es wird aber in keinem dieser Dokumenten wie im kennzeichnenden Teil des Anspruches, "dass das Prüfen der Gültigkeit der Objekte einer Produktleiste bei Zustandsänderung einer Bedienschaltfläche anhand einer von einem Kunden entsprechend seiner Wünschen zusammengesetzten Vergleichsfunktion gemacht werden kann".

Andere bekannte E-Commerce-Anwendungen basieren auf einer Datenbank, in der die Produkte des zu repräsentierenden Katalogs verwaltet und gepflegt werden.

Das Medium Internet bietet aber die Möglichkeit, aus den Datenbanken viel effektiver Produkte für den Kunden darzustellen, als es mit den bekannten E-Commerce-Anwendungen möglich ist, bei denen erst bei Aufruf eines Produktes die entsprechenden Informationen, z.B. der aktuelle Preis, aus der Datenbank gelesen und ausgegeben werden.
Das erfindungsgemäße Verfahren, das nachfolgend mit Produktfinder bezeichnet wird, basiert ebenfalls auf einem Produktkatalog. Der Unterschied zu bekannten E-Commerce-Anwendungen beruht darauf, daß keine Bindung an eine Gruppe von Produkten gegeben ist, sondern daß mit Hilfe von vorher vom Kunden während des Online-Zugriffs festgelegten Parametern eine Auswahl von bestimmten Produkten erfolgt.
Der Produktfinder besteht aus statischen Komponenten, die sich nicht verändern oder immer gleich ablaufen und aus dynamischen Komponenten, die sich an die Parameter anpassen, die vorab beispielsweise von einem Administrator des Produktfinders festgelegt wurden. Diese Parameter bewirken, daß in der Oberfläche des Produktfinders die richtigen Komponenten aufgebaut werden, daß die richtigen Daten aus der Datenbank geholt werden, und daß die weitere Verarbeitung der Daten auch wieder mit Interaktion des Benutzers richtig abläuft.
Komponenten eines universell einsetzbaren Produktfinders sind:
- Datenbankmanager
- Produktliste,
- Menge der Bedienschaltflächen,
- Ergebnisliste,
- Programmsteuerung und
- Parameterliste.

Die ersten fünf Komponenten weisen zusätzlich zu statischen Bestandteilen auch dynamische Bestandteile auf. Die neue

Komponente Parameterliste hingegen wird von allen anderen Komponenten verwendet, um den Produktfinder zu initialisieren.
Die wichtigsten Angaben für einen Parameter der Parameterliste sind :
- Tabellenname,
- Attributname,
- Bedienschaltflächentyp,
- Bedienschaltflächenlabel und
- Initialwert der Bedienschaltfläche und
- Vergleichsoperator.

Sinnvoll ist es weitere Parameter einzuführen, um den Produktfinder universell einsetzbar auszugestalten. Diese Parameter können z. B. sein:
- Pfad der Datenbank,
- Pfad der Produktbilder,
- Farben im Produktfinder und
- Schriftart im Produktfinder.
Tabellenname und Attributname sind relevant für die Datenbank, um richtige Daten für die interne Datenstruktur zu holen.
Bedienschaltflächentyp, Bedienschaltflächenlabel und
Initialwert der Bedienschaltfläche sind wichtig für die grafische Oberfläche und für die Verarbeitung der Daten aus deren Wertebereich. Der Vergleichsoperator verbindet bei interaktivem Auswählen einen Wert des Wertevorrates der Bedienschaltfläche mit Attributen der internen Datenstruktur, um diese zu vergleichen und die gültigen Objekte festzulegen.

Es können aber auch noch andere Einstellungen in die Parameterliste mit eingebracht werden, wie z. B. der Pfad der Bilder, der Pfad der Datenbank und weitere Einstellungen, die für die Umgebung des Produktfinders sinnvoll sind. Diese Angaben bewirken, daß der Produktfinder leicht an neue Einsatzgebiete angepaßt werden kann.

Nachfolgende statische Programmteile bilden das Grundgerüst des Produktfinders:
- Allgemeine Programmsteuerung,
- Funktion zur Bilddarstellung und
- Buttonleiste

Vorteilhaft ist es auch, bestimmte Bedienschaltflächen für Produkte statisch einzubinden (z. B. Preis des Produktes). Desweiteren ist es sinnvoll, Datenbankzugriffe, die bei jeder Initialisierung und Verarbeitung innerhalb des Produktfinders durchgeführt werden, immer durchzuführen. Die grafische Oberfläche des Produktfinders besteht aus vier Komponenten:
- Ergebnislistenfeld,
- Angezeigtes Bild,
- Buttonleiste und
- Gruppierungen von Bedienschaltflächen.
Es sollen dabei beliebig viele solcher Gruppierungen erzeugt werden, die wiederum beliebig viele Bedienschaltflächen enthalten können.

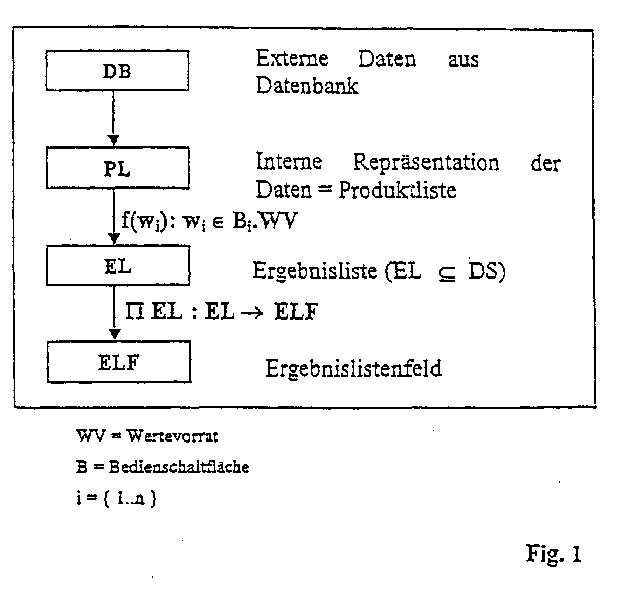

Das Verfahren zur datenbankgestützten Selektion von Produkten für Electronic-Commerce-Anwendungen im Internet basiert auf dem Zugriff auf ein Datenbank-Managementsystem, bei dem der Benutzer mit Hilfe von Bedienschaltflächen die Produktauswahl steuert. Das Verfahren setzt sich, wie in Fig. 1 abgebildet, aus mehreren Verfahrensschritten zusammen.

Im ersten Verfahrensschritt werden nach dem Start des Systems Daten aus der Datenbank des Datenbank-Managementsystems gelesen und in eine interne Datenstruktur (Produkt des Produktfinders konvertiert. Aus den Instanzen von der Datenstruktur Produkt wird eine Produktliste gebildet.

Im zweiten Verfahrensschritt wird anhand einer Vergleichsfunktion überprüft, ob die Objekte der Produktliste gültig sind. Die gültigen Objekte werden in eine Ergebnisliste (Liste der gültigen Objekte) kopiert. Die Vergleichsfunktion wird durch Aufruf des Produktfinders oder durch Ändern einer Bedienschaltfläche durch den Benutzer ausgelöst. Bei Zustandsänderung einer Bedienschaltfläche wird die Gültigkeit der Objekte der Produktliste anhand einer vom Benutzer/Kunden entsprechend seinen Wünschen zusammengestellten Vergleichsfunktion geprüft. Die Vergleichsfunktion setzt sich dabei aus den selektierten Werten der Bedienschaltflächen, den dazugehörigen Attributwerten von einen Objekt der Produktliste und einem Vergleichsoperator pro gewähltem Wert der Bedienschaltfläche zusammen.

In einem dritten Verfahrensschritt werden die anhand der Vergleichsfunktion ermittelten gültigen Objekte in eine Ergebnisliste eingetragen.

In einem vierten Verfahrensschritt wird die Ergebnisliste auf einem Ergebnislistenfeld dem Benutzer angezeigt. Der Benutzer kann seine Auswahl anhand der Objekte aus dem Ergebnislistenfeld vornehmen.

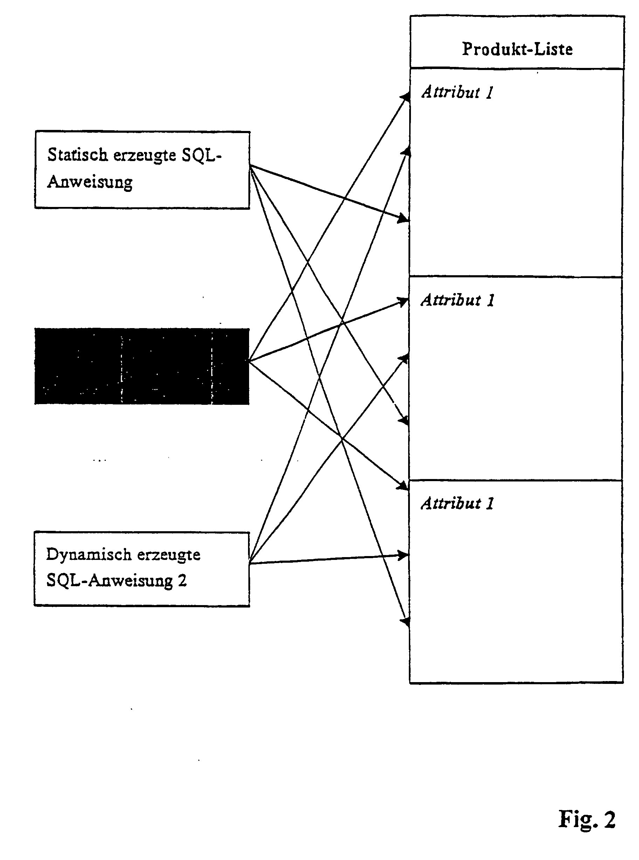

Nachfolgend wird jeder Schritt der Prozeßabfolge näher erläutert. Es wird zuerst beschrieben, wie der Ablauf der einzelnen Verfahrensschritte erfolgt. Danach wird aufgezeigt, welche Parameter vom Administrator festgelegt werden. Die Daten der Datenbank werden durch Tabellennamen und Attributnamen identifiziert. Im Produktfinder werden diese Daten Variablen und Formaten zugewiesen. Wenn man eine Datenbank nach Tabellen und Attributen abfragt, bekommt man als Ergebnis eine Datensatzliste. Um alle Produkte im Produktfinder zu speichern, muß eine ähnliche Datensatzliste in der Datenstruktur des Produktfinders vorhanden sein.
Dieser Sachverhalt wird im Produktfinder umgesetzt, wobei zu jedem Attribut der Datenbank das für den Produktfinder abgefragt wird, in der Datenstruktur des Produktfinders eine Variable existiert. Daraus ergibt sich, daß zu allen Attributen der Datenbank als Gegenstück eine Reihe von Variablen definiert wurde, welche genau ein Produkt bzw. eine Produktklasse bestimmt. Um alle Produkte in den Produktfinder einzufügen, wird jedes Produkt zu einem Objekt einer Liste aufgebaut. Diese Datenliste wird nachfolgend Produktliste genannt. In der nachfolgenden Tabelle wird den Attributen aus der Datenbank die jeweilige Variable des Produktfinders gegenübergestellt. Eine Reihe von Variablen wird dabei als Array bezeichnet.
Um die interne Datenstruktur zu füllen, muß für jede Tabelle und Attribut-Kombination eine SQL-Anweisung erzeugt werden, die auf die Datenbank zugreift und die Daten in die Produktliste überführt. Die Daten, die immer in der Datenstruktur des Produktfinders benötigt werden, können durch eine statische SQL-Anweisung abgehandelt und in die Datenstruktur Produkt übergeben werden. Um richtige dynamische SQL-Anweisungen zu erzeugen, muß ein Administrator vorher die Menge der Tabellennamen und die dazugehörigen Attribute festlegen. Die Anzahl der Tabellen bzw. Attribute bestimmt damit auch die Attributanzahl eines Objektes der Produktliste. Anhand von Fig.2 wird aufgezeigt, wie zwei dynamische und eine statische SQL-Anweisung abgehandelt und die jeweiligen Attribute der Produktliste aufgefüllt werden.
Eine Bedienschaltfläche wird durch das Beschriftungsfeld Label, den Typ der Schaltfläche und den Wertevorrat ausgezeichnet. Das Beschriftungsfeld setzt den Text fest, der für den späteren Benutzer des Produktfinders anzeigt, welche Merkmale er mit der Bedienschaltfläche einstellen kann. Der Typ legt die Art der Bedienschaltfläche fest, z. B.

Ankreuzfeld oder Auswahlfeld. Der Wertevorrat ist die Menge an Werten, die in der Bedienschaltfläche eingestellt werden kann, wobei dies Zahlen, Zeichenfolgen oder auch Wahrheitswerte sein können. Um die Bedienschaltfläche im Produktfinder aufzubauen, muß der Administrator den Typ und das Beschriftungsfeld angeben. Der Wertevorrat der Bedienschaltflächen stammt aus Attributwerten aus der Produktliste. Um die richtigen Attributwerte der Produktliste zu bekommen, gibt es eine Projektion auf ihre jeweiligen Objekte der Produktliste.
Zusammenfassend ist festzustellen,daß das Auffüllen des Wertevorrates immer durch die Bedienschaltfläche und die dazugehörigen Werte von einem Objekt der Produktliste bestimmt wird. Die bereits festgelegten Parameter (Tabellenname/Attributname der Datenbank des Administrators) legen bei Erweiterung durch Typ und Beschriftungsfeld der Bedienschaltflächen auch gleich die Herkunft des Wertevorrats fest.

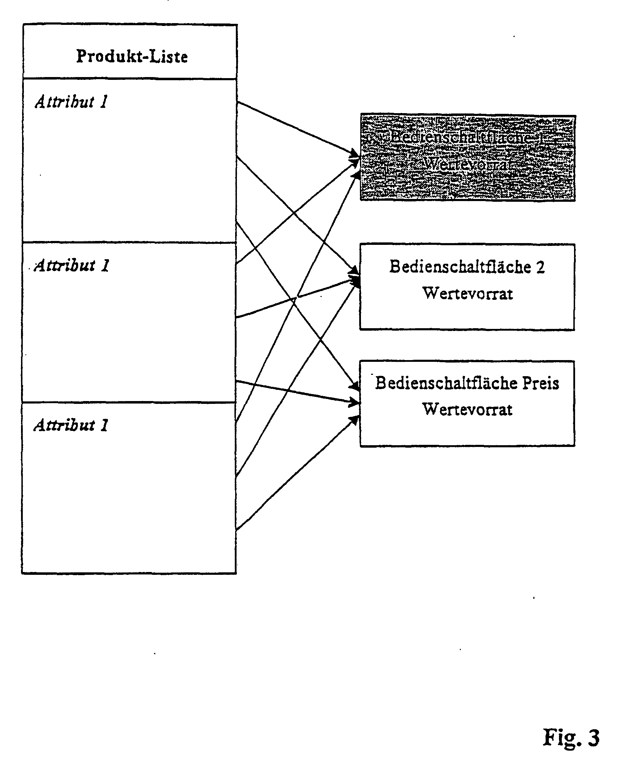

In Figur 3 wird ein Beispiel gezeigt, bei dem jeweils zwei dynamische und ein statisches Attribut von allen Objekten der Produktliste den Wertevorrat von Bedienschaltflächen füllen.
Im nächsten Schritt wird aus der Produktliste eine Ergebnisliste erstellt. Drei Komponenten sind vorgesehen, um die Ergebnisliste zu füllen:
- Bestimmte Attribute vom Produkt,
- ein ausgewählter Wert aus dem Wertevorrat einer Bedienschaltfläche und
- eine vorgegebene Verknüpfungsart.

Wenn der wieder durch eine Projektion bestimmte Wert eines Attributes eines Objektes der Produktliste verknüpft mit dem Wert aus dem Wertevorrat der Bedienschaltfläche einen gültigen Wert ergibt, dann ist das gesamte Objekt, aus dem das Attribut stammt, gültig und kann in die Ergebnisliste übertragen werden, falls auch die anderen Attribute mit ihren Verknüpfungsarten gültige Werte ergeben.

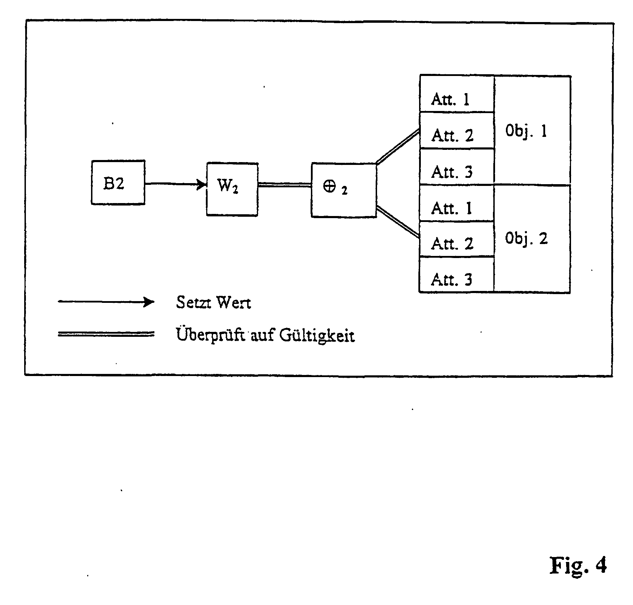

In Figur 4 wird der Prozeß des interaktiven Auswählens anhand eines Beispiels verdeutlicht. Im Beispiel setzt das System oder der Benutzer den Wert W2 aus dem Wertevorrat der Bedienschaltfläche B2. Dieser Wert wird mit Hilfe des Vergleichsoperators 2 mit dem Attribut Att. 2 der Produktliste verknüpft und auf Gültigkeit geprüft. Wenn diese Gültigkeit gegeben ist und auch alle anderen Gültigkeiten gegeben sind, dann wird genau dieses Objekt in die Ergebnisliste kopiert. Das geschieht ebenfalls mit allen anderen Objekten der Produktliste.
Die Werte aller gültigen Objekte stehen nun in der Ergebnisliste. Nachdem die Ergebnisliste aufgebaut ist, wird das Ergebnislistenfeld für den Benutzer sichtbar ausgegeben.
Das Ergebnislistenfeld ist eine Projektion aus der Ergebnisliste, d. h. nur bestimmte Attributwerte jedes Objektes der Ergebnisliste werden in das Ergebnislistenfeld übernommen. Bei den meisten Produktfindern ist es sinnvoll, den Namen und die Farbe des Produktes für den Benutzer auszugeben.

Für die Einbindung des Produktfinders in das Internet bestehen prinzipiell zwei Alternativen: Der Produktfinder läuft auf der Server-Seite ab und es werden nur Eingabe/Ergebnisse vom/zum Kunden übertragen. Die zweite Möglichkeit besteht darin, daß der Produktfinder als Programm auf den Rechner bzw. den Browser des Kunden übertragen wird.

Die erste Alternative läßt sich mit Hilfe der CGI-Programmierung lösen. Von einem Server wird dem Kunden ein HTML-Formular gesendet. Der Kunde bringt in das Formular Selektionseinstellungen seine Einträge ein. Durch einen "Übermitteln" Button werden die Ergebnisse der Selektion an ein serverseitiges CGI-Script gesendet. Dieses würde die Einstellungen benutzen, um aus einer Datenbank des Datenbank-Managementsystems die richtigen Produkte auszuwählen und das Ergebnis würde wieder an den Kunden als HTLM-Formular zurückgesendet.
Ein Vorteil dieser Methode besteht darin, daß das Formular sehr klein ist und schnell an den Kunden übermittelt werden kann. Ein weiterer Vorteil resultiert daraus, daß eine Datenbankabfrage auf einem leistungsfähigen Server sehr schnell abläuft. Die Übermittlung des Ergebnisses in Form einer HTML-Seite ist auch nicht zeitkritisch. Ein Nachteil dieser Methode wird darin gesehen, daß der Kunde bei jeder Variation seiner Selektionseinstellungen auf den "Übermitteln" Button drücken und damit immer wieder eine Serververbindung aufbauen müßte. Eine solche Serververbindung verzögert die Bereitstellung des gewünschten Ergebnisses beim Kunden.
Für die zweite Alternative, bei der der Produktfinder auf der Client-Seite abläuft, gibt es zwei Realisierungsmöglichkeiten.
Die erste Realisierungsmöglichkeit basiert auf einem auf dem Client ablaufendem Script, wie z. B. Java Script oder Visual Basic Script.

Die zweite Möglichkeit zur Umsetzung des Produktfinders auf der Client-Seite beruht auf Programmen, die in die zu übertragenden HTML-Seiten eingebunden sind. Solche Programme sind z. B. Java-Applets oder ActiveX-Komponenten. Ein Vorteil dieser Variante besteht darin, daß sofortige Interaktivität mit dem Kunden möglich ist. Das bedeutet, daß der Kunde Selektionen durchführen kann, die sofort abgearbeitet werden, und bei denen das Ergebnis ohne zeitliche Verzögerung dem Kunden zur Verfügung steht.

Das erfindungsgemäße Verfahren läßt sich vorteilhaft bei E-Commerce-Anwendungen im Internet anwenden, da es dem Kunden die Produktsuche erleichtert.

## Patentansprüche

1. Verfahren zur datenbankgestützten Selektion von Produkten für Electronic- Commerce-Anwendungen im Internet, mit Zugriff auf ein Datenbank- Managementsystem, bei dem der Benutzer mit Hilfe von Bedienschaltflächen die Produktauswahl steuert,
**gekennzeichnet durch folgende Schritte:**
- Auslesen von Daten aus der Datenbank des Datenbank Managementsystems nach Start des Systems, konvertieren einer internen Datenstruktur, welche die Produkte der Datenbank enthält und Erstellen einer Produktliste,
- Prüfen der Gültigkeit der Objekte der Produktliste bei Zustandsänderung einer Bedienschaltfläche anhand einer vom Kunden entsprechend seinen Wünschen zusammengesetzten Vergleichsfunktion, welche sich aus den selektierten Werten der Bedienschaltfläche, den dazugehörigen Attributwerten von einem Objekt der Produktliste und einem Vergleichsoperator pro gewähltem Wert einer Bedienschaltfläche zusammensetzt,
- Eintragen der gültigen Objekte in eine Ergebnisliste,
- Abbilden der Ergebnisliste auf einem Ergebnislistenfeld, welches dem Benutzer angezeigt wird.

## Claims

1. Process for the database-supported selection of products for electronic-commerce applications on the internet, with accessing of a database management system in which the user controls the selection of products with the aid of control buttons,
**characterized by the following steps:**
- reading out of data from the database of the database management system after the start of the system, conversion of an intemal data structure containing the products of the database and creation of a product list;
- checking of the validity of the objects in the product list upon change of state of a control button on the basis of a comparison function composed by the customer according to his/her requirements, said comparison function being composed of the selected values of the control button, the associated attribute values of an object in the product list and a comparison operator for each selected value of a control button;
- entering of the valid objects in a result list;
- imaging of the result list in a result list field which is displayed to the user.

## Revendications

1. Procédé de sélection, appuyée sur banque de données, de produits pour applications de commerce électronique sur Internet, avec accès à un système de gestion de banque de données, dans lequel l'usager pilote la sélection des produits à l'aide de boutons de commande,
**caractérisé par** les opérations suivantes :
- Sélection de données dans la banque de données du système de gestion de banque de données après le démarrage du système, conversion d'une structure de données interne qui contient les produits de la banque de données et compilation d'une liste de produits,
- Vérification de la validité des objets de la liste de produits en cas de changement d'état d'un bouton de commande à l'aide d'une fonction comparative établie par le client conformément à ses besoins et se composant des valeurs sélectionnées du bouton de commande, des valeurs d'attribut correspondantes d'un objet de la liste de produits et d'un opérateur de comparaison pour chaque valeur sélectionnée d'un bouton de commande,
- Inscription des objets valides dans une liste de résultats,
- Visualisation de la liste de résultats sur un champ de liste de résultats qui est présenté à l'usager.
